# EUROPÄISCHE PATENTSCHRIFT

(11) **EP 2 871 114 B1**
(45) Veröffentlichungstag und Bekanntmachung des Hinweises auf die Patenterteilung: **04.10.2017**
(21) Anmeldenummer: 14191709.6
(22) Anmeldetag: 04.11.2014
(51) Int. Cl.: B62D 5/12, B62D 7/14, B62D 7/16

(54) **Lenkachse**
Steering axle
Essieu directeur

(30) Priorität: 08.11.2013 DE 102013112313
(43) Veröffentlichungstag der Anmeldung: 13.05.2015
(73) Patentinhaber: BPW-Hungária Kft., 9700 Szombathely (HU)
(72) Erfinder: Vozár, János, 9700 Szombathely (HU); Andrási, Mátyás, 9700 Szombathely (HU)
(74) Vertreter: Bungartz Christophersen Partnerschaft mbB Patentanwälte

(56) Entgegenhaltungen:
- EP-A2- 2 343 229
- DE-A1- 3 205 979
- JP-A- 2006 159 962
- US-A- 5 094 312
- US-A1- 2012 242 054

## Beschreibung

Die Erfindung betrifft eine Lenkachse mit im Bereich der beiden Enden eines Achskörpers jeweils einem schwenkbeweglich gelagerten und mit einem Achsschenkel zur Lagerung des Fahrzeugrades versehenen Radträger, einem die Radträger gelenkig verbindenden, ein- oder mehrteiligen Zug- und Druckgestänge, einer hydraulischen Lenkeinheit zur Betätigung des Zug- und Druckgestänges, die ein gegenüber dem Achskörper zumindest in Achsrichtung festgelegtes Zylindergehäuse, einem darin beweglichen Kolben sowie mit dem Kolben verbundene, zu beiden Seiten aus dem Zylindergehäuse heraus führende Lenkstangen, die Teil des Zug- und Druckgestänges sind, aufweist, und mit außerhalb des Zylindergehäuses an den Lenkstangen angeordneten Anschlagelementen zur Begrenzung des Betätigungsweges des Zug- und Druckgestänges in Achsrichtung.

Lenkachsen mit diesen Merkmalen kommen in der Bauart als Nachlauf-Lenkachse z. B. in Schwerlast-Anhängerfahrzeugen mit Doppel- oder Dreifachachse zum Einsatz. Ausgelegt sind derartige Nachlauf-Lenkachsen zumeist für ein selbsttätiges Mitlenken bei Vorwärtsfahrt.

Ein aktives Mitlenken bei Rückwärtsfahrt oder auch Vorwärtsfahrt ermöglichen Zwangslenkungen, wie sie z. B. aus der DE 297 17 765 U1 oder der EP 2 343 229 A2 bekannt sind. Bei diesen lässt sich der Lenkwinkel der Lenkachse mittels eines in das Zug-und Druckgestänge integrierten hydraulischen Zylinders beeinflussen. Als problematisch herausgestellt hat sich, dass während des Lenkachsenbetriebs mit Zwangslenkungen Kräfte auftreten können, welche zu Beschädigungen des Zug- und Druckgestänges führen können.

Eine gattungsgemäße Lenkachse ist aus der DE 32 05 979 A1 bekannt. Für einen zumindest einseitigen Lenkanschlag ist außerhalb des hydraulischen Zylindergehäuses ein Anschlagelement an der Lenkstange angeordnet, welches den maximal möglichen Weg der Lenkstange begrenzt, sobald der Anschlag an einen Gegenanschlag stößt.

Aus der US 2012/0242054 A1 ist eine mechanische Zahnstangenlenkung für einen Pkw bekannt, bei der die Bewegung der Zahnstange durch Anschläge an den Lenkstangen begrenzt wird. Hierzu ist auf das Ende der jeweiligen Lenkstange eine Kugelpfanne aufgesetzt, deren dem Lenkgehäuse zugewandte Stirnfläche größer als der Querschnitt der Lenkstange ist.

Der Erfindung liegt die Aufgabe zugrunde, bei einer Lenkachse Maßnahmen zur Schonung des Zug- und Druckgestänges vor Beschädigungen infolge hoher Kräfte während des Lenkachsbetriebs vorzuschlagen.

Zur Lösung dieser Aufgabe wird eine Lenkachse mit den Merkmalen des Anspruchs 1 vorgeschlagen.

Diese technische Lösung beruht auf dem Gedanken, die axiale Beweglichkeit des Zug- und Druckgestänges auf einfache und Schäden weitgehend ausschließende Weise mechanisch zu begrenzen. Denn insbesondere bei großen Betätigungswegen und schlagartigen Belastungen des Zug- und Druckgestänges treten insbesondere in dessen Gelenken potentiell schädigend hohe Kräfte auf. Dadurch, dass nun die Betätigungswege durch die Anschlagselemente begrenzt werden, können die Kräfte, insbesondere auf die Gelenke, vermieden bzw. zumindest verringert werden. Die Positionierung der Anschlagelemente an den Lenkstangen hat außerdem den Vorteil, dass die auf das Zug- und Druckgestänge induzierten Kräfte zum einen in einem stabilen und zum anderen einfach zugänglichen Bereich aufgenommen werden.

Da die Anschlagelemente als auf den Lenkstangen befestigte Anschlagringe ausgestaltet sind, können die Anschlagringe aus günstigen Standardbauteilen gefertigt werden. Ferner bieten die beiden Stirnseiten eines Rings geeignete Anschlagflächen zur Begrenzung des Betätigungsweges, sodass derartige Anschlagringe aufgrund ihrer Symmetrie identisch zu beiden Seiten des Zylindergehäuses verwendet werden können.

Da die Anschlagelemente in Achsrichtung verstellbar sind, bietet sich die Möglichkeit, im Einzelfall die tatsächlichen Gegebenheiten, wie z. B. Stärke der verwendeten Lenkeinheit oder auch der Verschleißzustand der Gelenke des Zug- und Druckgestänges, zu berücksichtigen.

Mit einer Ausgestaltung wird vorgeschlagen, dass sich der jeweilige Gegenanschlag an der Stirnwand des Zylindergehäuses befindet. Als Gegenanschlag dienen somit ohnehin vorhandene, von Haus aus stabile Elemente der Lenkachse, so dass keine zusätzlichen Elemente vorgesehen werden müssen. Diese Ausgestaltung ist deshalb von besonderem Vorteil, da bei modernen Lenkachsen die verwendeten hydraulische Zylinder beträchtliche Kräfte erzeugen, und diese Kräfte in der Praxis größer und für die Belastung der Gelenkverbindungen grundsätzlich problematischer sind, als die aus dem Umfeld herrührenden Druck- und Zugkräfte an den Gelenkverbindungen, z. B. die durch Fahrsituationen wie das schräge Auffahren auf eine hohe Bordsteinkante hervorgerufenen Kräfte.

Sehr einfach lässt sich eine derartige Verstellbarkeit dadurch realisieren, dass jeder Anschlagring zur Verstellung in Achsrichtung ein Innengewinde aufweist. Dies ermöglicht eine stufenlose Einstellung.

Zur Sicherung seiner Verstellposition kann der Anschlagring mit einer radialen Sicherungsschraube versehen sein. Alternativ zu der Sicherung durch eine radiale Sicherungsschraube besteht die Möglichkeit der Sicherung durch einen Sprengring, was einen noch etwas größeren Verstellbereich zulässt.

Mit einer weiteren Ausgestaltung wird vorgeschlagen, dass jede Lenkstange über ein Schwenkgelenk mit einer äußeren, zu dem Radträger führenden Lenkstange verbunden ist. Bei dem Schwenkgelenk handelt es sich in der Regel um ein Kardanwellengelenk.

Weitere Ausgestaltungen der Lenkachse betreffen die Verbindung der Lenkstange mit dem Schwenkgelenk. Es wird vorgeschlagen, dass die Lenkstangen an ihren Enden mit Gewindesacklöchern zum Eingriff eines korrespondierenden Gewindezapfens des Schwenkgelenks versehen ist, und ferner, dass die Gewindeverbindung der Lenkstange und des Schwenkgelenks über eine Kontermutter drehgesichert ist, wobei ein Innengewinde der Kontermutter auf ein Außengewinde am Ende der Lenkstange geschraubt ist.

Mit einer bevorzugten Ausgestaltung wird vorgeschlagen, dass die Kontermutter mit einem Außengewinde versehen ist, auf welches der Anschlagring geschraubt ist. Bei dieser Ausgestaltung wird wiederum ein ohnehin vorhandenes Element dazu genutzt, eine zusätzliche Funktion zu übernehmen. Die Doppelfunktion der Kontermutter besteht zum einen darin, über ihr Innengewinde die Verbindung zwischen Lenkstange und Schwenkgelenk zu sichern, und zum anderen darin, über ihr Außengewinde die Verstellbarkeit des Anschlagrings zu ermöglichen. Die so vorgeschlagenen Gewindeverbindungen sind sehr tragfähig und somit gut geeignet, die hohen Belastungen beim Kontakt des Anschlagrings mit dem Zylindergehäuse aufzunehmen.

Zur Sicherung der Verstellposition des Anschlagrings wird mit einer weiteren Ausgestaltung vorgeschlagen, dass das Außengewinde der Kontermutter mit einer Längsnut versehen ist, in die hinein sich eine Sicherungsschraube oder ein Sicherungsring erstreckt.

Um in Situationen, in denen, z. B. bei Rückwärtsfahrt, ein Lenken gerade nicht gewünscht ist, eine Mittelposition des Zug- und Druckgestänges herbeiführen zu können, wird mit einer Ausgestaltung vorgeschlagen, dass die Lenkeinheit eine Sperrvorrichtung aufweist, mittels der das Zug- und Druckgestänge in einer neutralen Position fixiert ist. Eine neutrale Betätigungsposition des Zug- und Druckgestänges führt in der Regel zu einer Ausrichtung der Radträger für die Geradeausfahrt.

Weitere Vorteile und Einzelheiten ergeben sich aus der nachfolgenden Beschreibung eines Ausführungsbeispiels, wobei auf die Zeichnung Bezug genommen wird. Darin zeigen:
- Fig. 1: eine perspektivische Gesamtdarstellung der Lenkachse;
- Fig. 2: den kreisförmigen Ausschnitt aus Fig. 1 in vergrößerter Darstellung;
- Fig. 3: die Gegenstände nach Fig. 2 in einer Explosionsdarstellung;
- Fig. 4: die Gegenstände nach Fig. 2 in teilweise geschnittener Draufsicht;
- Fig. 5a: die Gegenstände nach Fig. 2 in einer ersten Verstellposition des Anschlagrings;
- Fig. 5b: die Gegenstände nach Fig. 5a in einer zweiten Verstellposition des Anschlagrings;
- Fig. 6a: die Lenkachse in neutraler Betätigungsposition des Zug- und Druckgestänges;
- Fig. 6b: die Lenkachse in eingelenkter Betätigungsposition mit Anschlag eines Anschlagringes an einer Stirnwand des Zylindergehäuses.

Die Erläuterung der Erfindung erfolgt im Folgenden anhand einer Nachlauf-Lenkachse, wie sie häufig bei Schwerlastfahrzeugen und insbesondere bei Anhängerfahrzeugen Einsatz findet. Die Figuren zeigen teilweise lediglich Teile einer Seite der Lenkachse, jedoch ist die andere Seite der Nachlauf-Lenkachse in Bezug auf die Fahrzeugmittellinie symmetrisch angeordnet.

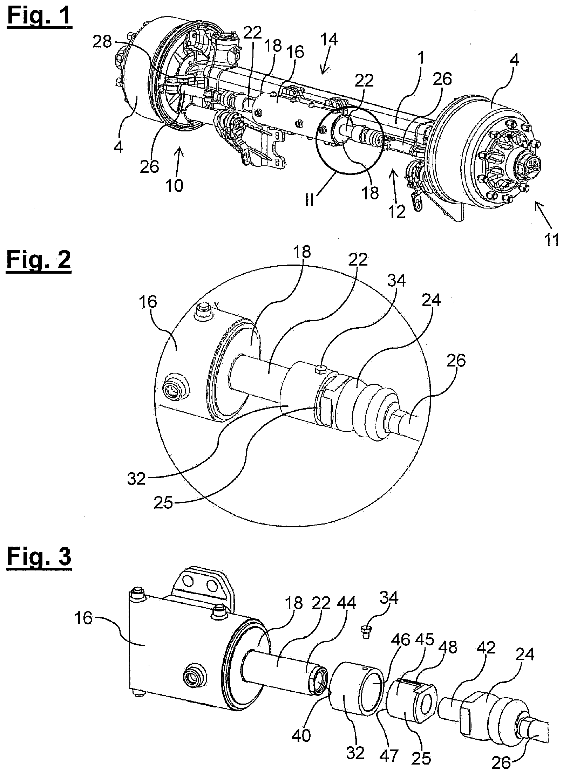

Figur 1 zeigt in perspektivischer Darstellung eine Gesamtübersicht einer erfindungsgemäßen Ausführungsform der Lenkachse. Ein Achskörper 1 in Gestalt eines sich über den größten Teil der Fahrzeugbreite erstreckenden Vierkantrohres ist auf beiden Fahrzeugseiten über einen nicht dargestellten Achslenker sowie den Luftbalg einer Luftfederung gegenüber dem Fahrzeugchassis abgestützt. Zur Einstellung der Räder auf Links- oder Rechtsfahrt sind zur Lagerung der Fahrzeugräder an beiden Enden des Achskörpers 1 mit einem Achsschenkel 11 versehene Radträger 10 schwenkbeweglich an dem Achskörper 1 gelagert. Aufgrund der perspektivischen Darstellung in Figur 1 und der auf den Achsschenkeln 11 montierten Räder 4 bzw. Trommelbremsen sind in Figur 1 die Radträger 10 mit den Achsschenkeln 11 nur schlecht bzw. nicht zu erkennen.

Zur Einstellung der Räder 4 auf Links- oder Rechtsfahrt durch eine Zwangslenkung sind die Radträger 10 über ein Zug- und Druckgestänge 12 miteinander verbunden, wobei das Zug-und Druckgestänge 12 durch eine zentral angeordnete Lenkeinheit 14 hindurchgeführt ist. Diese weist ein Zylindergehäuse 16 mit zwei Stirnwänden 18 auf, wodurch mindestens zwei durch einen Kolben getrennte Druckräume geschaffen werden. Der Kolben und die Druckräume sind in den Figuren nicht dargestellt.

Über schaltbare Ventilsteuerungen lassen sich die Druckräume wechselseitig mit hydraulischem Druck beaufschlagen, um so die Räder des Fahrzeuges entsprechend den Steuerbefehlen zu lenken.

Durch die Stirnwände 18 des Zylindergehäuses 16 sind zwei über den Kolben miteinander verbundene innere Lenkstangen 22 jeweils nach fahrzeugaußen in Richtung zu den Radträgern 10 hin abgedichtet herausgeführt. Die inneren Lenkstangen 22 sind jeweils an ihren äußeren Enden über ein Kardanwellengelenk 24 mit weiteren, äußeren Lenkstangen 26 verbunden. Alle Lenkstangen 22, 26 sind, ebenso wie die am Radträger 10 befestigten Lenkarme 28, Bestandteile des Zug- und Druckgestänges 12. Die äußeren Lenkstangen 26 sind dabei über Schwenkgelenke 30 mit den Lenkarmen 28 verbunden. Insbesondere diese Schwenkgelenke 30 haben sich als anfällig für Beschädigungen durch die durch die Lenkeinheit 14 induzierten Kräfte erwiesen und werden durch die Begrenzung der Betätigungswege des Zug- und Druckgestänges 12 über im Folgenden näher erläuterte Anschlagringe 32 geschont.

Figur 2 zeigt den Ausschnitt II der Figur 1 in vergrößertem Maßstab. Dargestellt ist das rechte Ende des Zylindergehäuses 16, durch dessen kreisförmige Stirnwand 18 die rechte Lenkstange 22 herausgeführt ist. Die Zeichnung zeigt ferner die rechte äußere Lenkstange 26, das die beiden Lenkstangen 22, 26 verbindende Kardanwellengelenk 24 sowie das als Anschlagring gestaltete Anschlagelement 32, welches mit einem Innengewinde 46 versehen ist (Fig. 3).

Weitere Einzelheiten der in Figur 2 gezeigten Bauteile sind in Figur 3 zu erkennen. Diese zeigt die identischen Bauteile wie Figur 2, jedoch sind durch die Explosionsdarstellung weitere Einzelheiten der betroffenen Bauteile sowie deren Zusammenwirken besser zu erkennen bzw. insbesondere nicht dargestellte Gewinde gut erläuterbar.

So weist die Lenkstange 22 an ihrem nach außen weisenden Ende stirnseitig zentriert ein Gewindesackloch 40 auf, in welches ein Gewindezapfen 42 durch Verschraubung aufgenommen ist. Zusätzlich weist die Lenkstange 22 am gleichen Ende ein Außengewinde 44 auf, auf welches eine ringförmig ausgestaltete Kontermutter 25 über ein Innengewinde 47 der Kontermutter 25 aufgeschraubt ist. Dies führt zu einer Sicherung der Gewindeverbindung zwischen dem Gewindesackloch 40 der Lenkstange 22 und dem Gewindezapfen 42 des Kardanwellengelenks 24.

Die Kontermutter 25 weist außer ihrem Innengewinde 47 auch ein Außengewinde 45 auf, welches zusätzlich mit einer Längsnut 48 versehen sein kann. Während das Außengewinde 45 die Verstellbarkeit des mit dem korrespondierenden Innengewinde 46 versehenen Anschlagrings 32 durch Drehen des Anschlagrings 32 ermöglicht, lässt sich die so einmal eingestellte Längsposition des Anschlagrings 32 durch Eingriff einer Sicherungsschraube 34 in die Längsnut 48 sichern. Die Sicherungsschraube 34 ist mit ihrem Gewinde radial durch den Ringmantel des Anschlagrings 32 geführt und ragt mit ihrem Ende in die Längsnut 48 der Kontermutter 25. Dadurch, dass nur eine Längsnut 48 vorgesehen ist, ist der Anschlagring 32 pro Gewindeumdrehung nur ein Mal über die Kombination aus Sicherungsschraube 34 und Längsnut 48 sicherbar. Ausgestaltungen mit mehreren über den Umfang verteilt angeordneten Längsnuten 48 sind ebenfalls möglich.

Alternativ zu der Sicherung durch eine radiale Sicherungsschraube besteht die Möglichkeit der Sicherung durch einen Sicherungsring, zum Beispiel einen Sprengring, was einen noch etwas größeren Verstellbereich zulässt. Hierzu befindet sich in der Mantelfläche des Anschlagrings 32 eine Ringnut zur Aufnahme des Sicherungsrings. Vorzugsweise befindet sich diese Ringnut nahe des dem jeweiligen Radträger 10 zugewandten Endes des Anschlagrings 32. An dem Sicherungsring bzw. Sprengring ist ein nach radial innen ragender Vorsprung ausgebildet. Dieser erstreckt sich dann durch eine radiale Öffnung in dem Ringmantel des Anschlagrings 32 hindurch bis in die Längsnut 48.

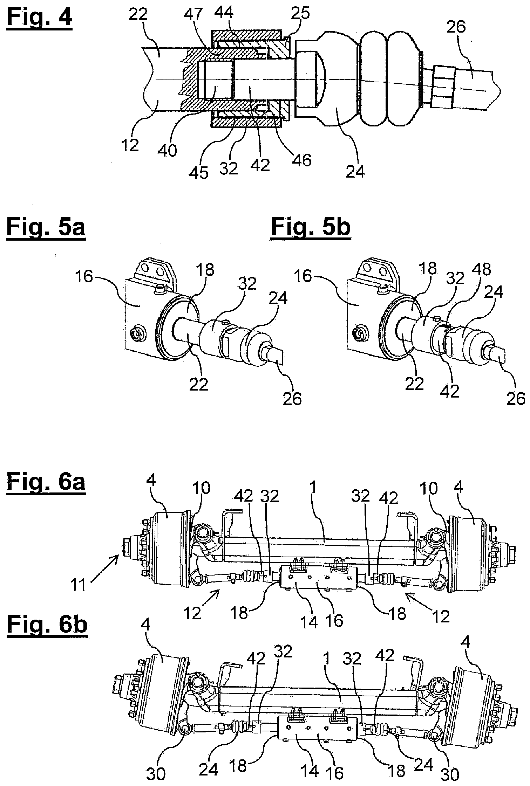

Figur 4 zeigt den Verbindungsbereich zwischen Lenkstange 22 und äußerer Lenkstange 26 in teils geschnittener Draufsicht. Teilweise fehlt jedoch die Darstellung vorhandener Gewinde. Von innen, d. h. der gemeinsamen Mittelachse, nach außen gehend ist zunächst der Gewindezapfen 42 des Kardanwellengelenks 24 in das Gewindesackloch 40 der Lenkstange 22 geschraubt. Auf das Außengewinde 44 der Lenkstange 22 ist die Kontermutter 25 über ihr Innengewinde 47 bis zum Anschlag gegen die Stirnseite der Lenkstange 22 geschraubt. Auf das Außengewinde 45 der Kontermutter 25 ist wiederum der Anschlagring 32 über sein Innengewinde 46 verschraubt.

Dabei bestimmt die Verschraub- bzw. Verstellposition des Anschlagrings 32 auf der Kontermutter 25 den maximal möglichen Betätigungsweg des Zug- und Druckgestänges 12. Je weiter der Anschlagring 32 auf die Kontermutter 25 geschraubt ist, desto weiter entfernt er sich von der als Gegenanschlag dienenden Stirnwand 18 des Zylindergehäuses 16, und desto größer ist somit der größtmögliche Betätigungsweg des Zug- und Druckgestänges 12 bis zum Kontakt des Anschlagsrings 32 mit der den Gegenanschlag bildenden Stirnwand 18 des Zylinders, und damit auch der Lenkeinschlag der Radträger 10.

Dies wird in den Figuren 5a und 5b sowie den Figuren 6a und 6b deutlich. Die Figuren 5a und 5b entsprechen im Wesentlichen der Figur 2, wobei in der Figur 5a der Anschlagring 32 so weit wie möglich auf den Gewindezapfen 42 des Kardanwellengelenks 24 aufgeschraubt ist. Dadurch nimmt der Anschlagring 32 auf der Lenkstange 22 die am weitesten von der Stirnwand 18 des Zylindergehäuses 16 mögliche Verstellposition ein. In Figur 5b ist der Anschlagring 32 lediglich minimal auf den Gewindezapfen 42 aufgeschraubt, so dass der Anschlagring 32 die am wenigsten entfernte Verstellposition von der Stirnwand 18 einnimmt.

Die Figuren 6a und 6b zeigen jeweils die gleiche Draufsicht auf die gesamte Lenkachse, wobei das Zug- und Druckgestänge 12 in Figur 6a eine mittlere, d. h. neutrale, Position einnimmt, wogegen in Figur 6b das Zug- und Druckgestänge 12 den für diese Verstellposition der Anschlagringe 32 größtmöglichen Betätigungsweg zeigt. Dabei ist in den Figuren 6a und 6b die Verstellposition der beiden Anschlagringe 32 zu beiden Seiten des Zylindergehäuses 16 identisch eingestellt, d. h. die Anschlagringe 32 sind jeweils gleich weit auf den Gewindezapfen 42 aufgeschraubt. Zu erkennen ist die neutrale Betätigungsposition des Zug- und Druckgestänges 12, neben der in Bezug auf den Achskörper 1 senkrechten Position der Räder 4 für die Geradeausfahrt, ferner auch die identischen Abstände zwischen den als Anschlag dienenden Stirnseiten der Anschlagelemente 32 und den Gegenanschlägen 18 am Zylinder.

Über eine in den Figuren nicht gezeigte Sperrvorrichtung der Lenkeinheit 14 kann das Zug-und Druckgestänge 12 in der in Figur 6a dargestellten neutralen Position fixiert werden, so dass eine Lenkbewegung unterbunden wird. In Figur 6b ist das Zug- und Druckgestänge 12 bei einer Lenkbetätigung durch die Lenkeinheit 14 dargestellt, wobei der Betätigungsweg durch Kontakt der inneren Stirnseite des rechten Anschlagrings 32 mit der rechten Stirnwand 18 des Zylindergehäuses 16 begrenzt ist.

### Bezugszeichenliste

- 1: Achskörper
- 4: Rad
- 10: Radträger
- 11: Achsschenkel
- 12: Zug- und Druckgestänge
- 14: Lenkeinheit
- 16: Zylindergehäuse
- 18: Stirnwand/Gegenanschlag
- 22: Lenkstange
- 24: Schwenkgelenk/Kardanwellengelenk
- 25: Kontermutter
- 26: äußere Lenkstange
- 28: Lenkarm
- 30: äußeres Schwenkgelenk
- 32: Anschlagelement/Anschlagring
- 34: Sicherungsschraube
- 40: Gewindesackloch
- 42: Gewindezapfen
- 44: Außengewinde
- 45: Außengewinde
- 46: Innengewinde
- 47: Innengewinde
- 48: Längsnut

## Patentansprüche

1. Lenkachse, vorzugsweise Nachlauf-Lenkachse, mit im Bereich der beiden Enden eines Achskörpers (1) jeweils einem schwenkbeweglich gelagerten und mit einem Achsschenkel (11) zur Lagerung des Fahrzeugrades versehenen Radträger (10), einem die Radträger (10) gelenkig verbindenden, ein- oder mehrteiligen Zug- und Druckgestänge (12), einer hydraulischen Lenkeinheit (14) zur Betätigung des Zug- und Druckgestänges (12), die ein gegenüber dem Achskörper (1) zumindest in Achsrichtung festgelegtes Zylindergehäuse (16), einen darin beweglichen Kolben sowie mit dem Kolben verbundene, zu beiden Seiten aus dem Zylindergehäuse (16) herausführende Lenkstangen (22), die Teil des Zug- und Druckgestänges (12) sind, aufweist, und mit außerhalb des Zylindergehäuses (16) an den Lenkstangen (22) angeordneten Anschlagelementen (32) zur Begrenzung des Betätigungsweges des Zug- und Druckgestänges (12) in Achsrichtung, **dadurch gekennzeichnet, dass** die Anschlagelemente (32) auf den Lenkstangen (22) befestigte Anschlagringe sind, und dass die Anschlagelemente (32) in Achsrichtung verstellbar sind.

2. Lenkachse nach Anspruch 1, **dadurch gekennzeichnet, dass** sich der jeweilige Gegenanschlag an der Stirnwand (18) des Zylindergehäuses (16) befindet.

3. Lenkachse nach Anspruch 1, **dadurch gekennzeichnet, dass** jeder Anschlagring (32) zur Verstellung in Achsrichtung ein Innengewinde (46) aufweist.

4. Lenkachse nach Anspruch 3, **dadurch gekennzeichnet, dass** der Anschlagring (32) zur Sicherung seiner Verstellposition mit einer radialen Sicherungsschraube (34) oder mit einem in eine Ringnut des Anschlagrings (32) einsetzbaren Sprengring versehen ist.

5. Lenkachse nach einem der vorangehenden Ansprüche, **dadurch gekennzeichnet, dass** jede Lenkstange (22) über ein Schwenkgelenk (24) mit einer äußeren, zu dem Radträger (10) führenden Lenkstange (26) verbunden ist.

6. Lenkachse nach Anspruch 5, **dadurch gekennzeichnet, dass** die Lenkstange (22) an ihren Enden mit Gewindesacklöchern (40) zum Eingriff eines korrespondierenden Gewindezapfens (42) des Schwenkgelenks (24) versehen ist.

7. Lenkachse nach Anspruch 6, **dadurch gekennzeichnet, dass** die Gewindeverbindung der Lenkstange (22) und des Schwenkgelenks (24) über eine Kontermutter (25) drehgesichert ist, wobei ein Innengewinde (47) der Kontermutter (25) auf ein Außengewinde (44) am Ende der Lenkstange (22) geschraubt ist.

8. Lenkachse nach Anspruch 7, **dadurch gekennzeichnet, dass** die Kontermutter (25) mit einem Außengewinde (45) versehen ist, auf welches der Anschlagring (32) schraubbar ist.

9. Lenkachse nach Anspruch 8, **dadurch gekennzeichnet, dass** das Außengewinde (45) der Kontermutter (25) zur Sicherung der Verstellposition des Anschlagrings (32) mit einer Längsnut (48) versehen ist, in die hinein sich eine Sicherungsschraube (34) oder ein Sicherungsring erstreckt.

10. Lenkachse nach einem der vorangehenden Ansprüche, **dadurch gekennzeichnet, dass** die Lenkeinheit (14) eine Sperrvorrichtung aufweist, mittels der das Zug- und Druckgestänge (12) in einer neutralen Position fixiert ist.

## Claims

1. Steering axle, preferably trailing steering axle, having, in the region of the two ends of an axle beam (1), in each case one pivotably movably mounted wheel support (10) which is provided with a steering knuckle (11) for mounting the vehicle wheel, a single-piece or multiple-piece push-pull link bar (12) which connects the wheel supports (10) in an articulated manner, a hydraulic steering unit (14) for actuating the push-pull link bar (12), which hydraulic steering unit (14) has a cylinder housing (16) which is fixed at least in the axial direction with respect to the axle beam (1), a piston which can be moved in the said cylinder housing (16), and steering rods (22) which are connected to the piston, lead out of the cylinder housing (16) on both sides, and are part of the push-pull link bar (12), and having stop elements (32) which are arranged on the steering rods (22) outside of the cylinder housing (16) for limiting the actuating travel of the push-pull link rod (12) in the axial direction, **characterized in that** the stop elements (32) are stop rings which are fastened on the steering rods (22), and **in that** the stop elements (32) can be adjusted in the axial direction.

2. Steering axle according to Claim 1, **characterized in that** the respective counter-stop is situated on the end wall (18) of the cylinder housing (16).

3. Steering axle according to Claim 1, **characterized in that** each stop ring (32) has an internal thread (46) for adjustment in the axial direction.

4. Steering axle according to Claim 3, **characterized in that**, in order to secure its adjustment position, the stop ring (32) is provided with a radial securing bolt (34) or with a circlip which can be inserted into an annular groove of the stop ring (32).

5. Steering axle according to one of the preceding claims, **characterized in that** each steering rod (22) is connected via a pivoting joint (24) to an outer steering rod (26) which leads to the wheel support (10).

6. Steering axle according to Claim 5, **characterized in that** the steering rod (22) is provided at its ends with threaded blind holes (40) for the engagement of a corresponding threaded pin (42) of the pivoting joint (24).

7. Steering axle according to Claim 6, **characterized in that** the threaded connection of the steering rod (22) and the pivoting joint (24) is secured against rotation via a lock nut (25), an internal thread (47) of the lock nut (25) being screwed onto an external thread (44) at the end of the steering rod (22).

8. Steering axle according to Claim 7, **characterized in that** the lock nut (25) is provided with an external thread (45), onto which the stop ring (32) can be screwed.

9. Steering axle according to Claim 8, **characterized in that** the external thread (45) of the lock nut (25) is provided with a longitudinal groove (48) for securing the adjustment position of the stop ring (32), into which longitudinal groove (48) a securing bolt (34) or a securing ring extends.

10. Steering axle according to one of the preceding claims, **characterized in that** the steering unit (14) has a locking apparatus, by means of which the push-pull link rod (12) is fixed in a neutral position.

## Revendications

1. Essieu directeur, de préférence essieu directeur autodirectionnel, comprenant, dans la région des deux extrémités d'un corps d'essieu (1), à chaque fois un support de roue (10) supporté de manière pivotante et pourvu d'une fusée d'essieu (11) pour supporter la roue du véhicule, une tringlerie de traction et de pression (12) en une ou plusieurs parties, reliant de manière articulée les supports de roue (10), une unité de direction hydraulique (14) pour l'actionnement de la tringlerie de traction et de pression (12), qui présente un logement de cylindre (16) fixé au moins dans la direction axiale par rapport au corps d'essieu (1), un piston déplaçable dans celui-ci, et des barres de direction (22) connectées au piston, sortant du logement de cylindre (16) des deux côtés, qui font partie de la tringlerie de traction et de pression (12), et comprenant des éléments de butée (32) disposés à l'extérieur du logement de cylindre (16) sur les barres de direction (22) pour limiter la course d'actionnement de la tringlerie de traction et de pression (12) dans la direction axiale, **caractérisé en ce que** les éléments de butée (32) sont des bagues de butée fixées sur les barres de direction (22), et **en ce que** les éléments de butée (32) peuvent être déplacés dans la direction axiale.

2. Essieu directeur selon la revendication 1, **caractérisé en ce que** la butée conjuguée respective se trouve au niveau de la paroi frontale (18) du logement de cylindre (16).

3. Essieu directeur selon la revendication 1, **caractérisé en ce que** chaque bague de butée (32) présente un filetage interne (46) pour le réglage dans la direction axiale.

4. Essieu directeur selon la revendication 3, **caractérisé en ce que** la bague de butée (32), pour la fixation de sa position de réglage, est pourvue d'une vis de fixation radiale (34) ou d'un jonc pouvant être inséré dans une rainure annulaire de la bague de butée (32).

5. Essieu directeur selon l'une quelconque des revendications précédentes, **caractérisé en ce que** chaque barre de direction (22) est reliée par le biais d'une articulation pivotante (24) à une barre de direction extérieure (26) conduisant au support de roue (10).

6. Essieu directeur selon la revendication 5, **caractérisé en ce que** la barre de direction (22) est pourvue, au niveau de ses extrémités, de trous borgnes filetés (40) pour l'engagement d'un tourillon fileté correspond (42) de l'articulation pivotante (24).

7. Essieu directeur selon la revendication 6, **caractérisé en ce que** la liaison filetée de la barre de direction (22) et de l'articulation pivotante (24) est fixée en rotation par le biais d'un contre-écrou (25), un filetage interne (47) du contre-écrou (25) étant vissé sur un filetage externe (44) à l'extrémité de la barre de direction (22).

8. Essieu directeur selon la revendication 7, **caractérisé en ce que** le contre-écrou (25) est pourvu d'un filetage externe (45) sur lequel peut être vissée la bague de butée (32).

9. Essieu directeur selon la revendication 8, **caractérisé en ce que** le filetage externe (45) du contre-écrou (25), pour fixer la position de réglage de la bague de butée (32), est pourvu d'une rainure longitudinale (48) dans laquelle s'étend une vis de fixation (34) ou une bague de fixation.

10. Essieu directeur selon l'une quelconque des revendications précédentes, **caractérisé en ce que** l'unité de direction (14) présente un dispositif de blocage au moyen duquel la tringlerie de traction ou de pression (12) est fixée dans une position neutre.
